# EUROPEAN PATENT SPECIFICATION

(11) **EP 0 968 653 B1**
(45) Date of publication and mention of the grant of the patent: **16.06.2004**
(21) Application number: 98111954.8
(22) Date of filing: 29.06.1998
(51) Int. Cl.: A21C 15/04

(54) **Apparatus for cutting shell valves formed in a wafer sheet**
Vorrichtung zum Ausschneiden von in einem Waffelblatt geformten Halbschalen
Appareil de découpage de demi-coquilles formées dans une feuille à gaufrettes

(43) Date of publication of application: 05.01.2000
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Sobrero, Giovanni, 12050 Cerreto Delle Langhe (Cuneo) (IT)
(74) Representative: Rambelli, Paolo

(56) References cited:
- EP-A- 0 054 229
- EP-A- 0 221 033
- EP-A- 0 583 740
- GB-A- 222 199
- US-A- 2 448 786
- US-A- 4 200 417

## Description

Numerous food products, especially confectionery and pastry products, comprise a filling enclosed in a shell formed from two wafer valves. Depending on the product, the shell can have various dimensions and different shapes (for example, spherical, ovoidal, bar-shape, double truncated pyramid, etc.). Products having this structure are, for example, the products sold by the companies of the Ferrero group under the commercial names Ferrero Rocher, Raffaello, Giotto and Tonus.

In order to obtain the valves, a wafer sheet is first prepared by cooking on a cellular plate having cavities to form a sheet which has an array of cavities that are identical to each other and complementary in shape to the valves. In the wafer sheet thus obtained, the valves project on one side of the wafer sheet itself and are interconnected with each other at the respective free edges of a continuous flat wall of wafer, referred to here as a "web".

The valves are then separated from the web by punching through the web along the free edge of each valve or, according to the arrangement described in European Patent No. EP-A-0 054 229 and the corresponding US Patent No. US-A-4 458 568, by cutting parallel to the plane of the wafer sheet.

This operation may be performed using a band saw or a endless wire saw while the wafer is held by a cellular support which moves towards the saw blade.

Although completely satisfactory - in particular, as regards the quality of the final product - this arrangement can give rise, during operation, to several disadvantages among which the following can be indicated:
- a certain instability and inaccuracy in the positioning of the central portion of that part of the saw which performs the cutting action; and
- the necessity, during the cutting operation, of transferring the wafer sheet from the cellular moulds in which it is located onto a cutting support adapted to the dimensions and size of the saw, and then returning the valves, once separated from the membrane, back into the cellular moulds which accommodate them during the subsequent filling operation.

The first disadvantage, which manifests itself substantially in the form of a vibration of the saw blade, is particularly evident when cutting wafer sheets having a considerable transverse width.

The second disadvantage arises substantially in the presence of lateral pulleys over which the saw band passes. The consequent need to transfer the wafer sheets before and after the cutting operation limits the speed and efficiency of the production process.

These disadvantages are overcome by the arrangement described in European Patent No. EP-A-0 221 033, and in the corresponding US Patent No. US-A-4 770 351.

In this latter arrangement, the cutting operation is effected with an array of disc saws. The discs of the saws act in a single plane parallel to the general plane of the wafer sheet with the respective centres aligned in a direction substantially orthogonal to the direction of advance of the wafer sheet with respect to the saws. The diameter of the disc of each saw is substantially equal to a whole multiple of the diametral dimension of the valves resulting from the cutting operation.

The existence of a correlation between the diameter of the disc saws and the diameter of the valves means that, in some cases, cutting apparatus originally positioned to work on a certain product cannot immediately be converted for cutting products having different dimensions.

The object of the present invention is to provide apparatus having the characteristics indicated in the preamble of Claim 1 known, for example, from EP-A-0 054 299 or EP-A-0 221 033, which does not give rise to the aforesaid disadvantages.

According to the present invention, this object is achieved by apparatus of the type indicated above, having the characteristics referred to in the following Claim 1.

The invention will now be described, purely by way of non-limitative example, with reference to the accompanying drawings in which:
- Figure 1 is a side view, partly separated and in section, of an apparatus of the invention;
- Figure 2 is a section taken on the line II-II of Figure 1; and
- Figure 3 is a view according to the arrow III of Figure 1.

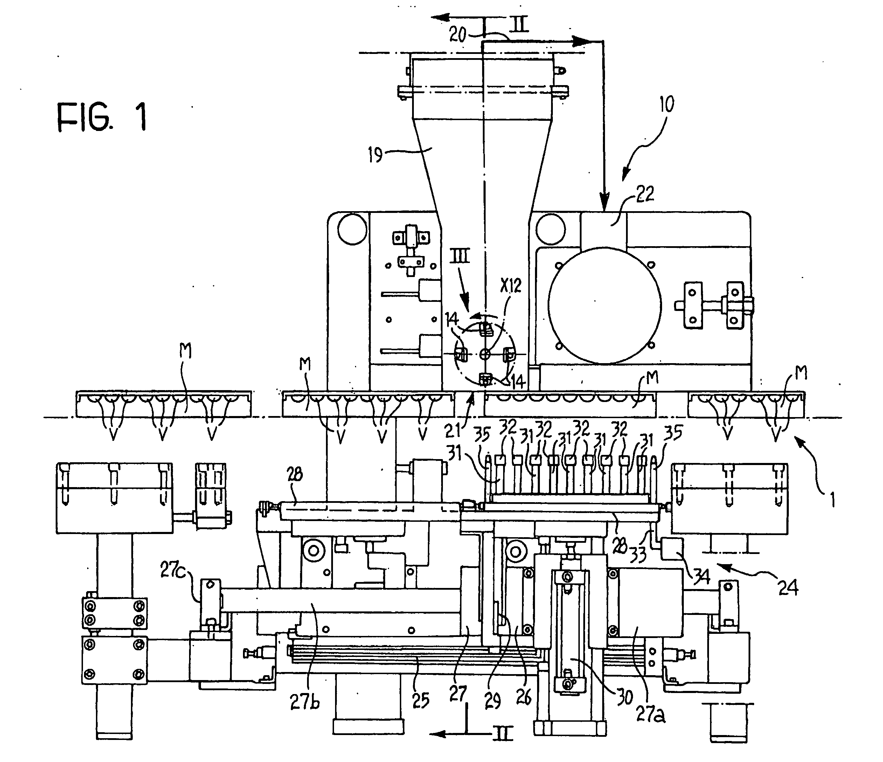

In Figure 1, the reference numeral 1 indicates a conveyor (of known type) on which cellular moulds M advance in a generally horizontal direction and from right to left in a continuous or substantially continuous flow. These can be, for example, moulds of the type described in European Patent Application Nos. EP-A-0 083 324 and EP-A-0 583 740. In particular, this latter application describes a conveyor structure on which the moulds M are essentially free, in the sense that the conveyor has no mechanism for forcibly dragging the moulds.

The term "cellular" is intended to designate moulds essentially constituted by a flat plate in which cavities are formed - usually passing right through - with a general bowl-like shape, facing upwards in the use position. Moulds of this type can be used to manufacture, starting from a mixture of water, flour and various additives, wafer sheets C constituted by a plurality of valves V, the shape of which complements that of the cavities in the moulds, which valves are connected together at their free edges by a flat continuous wall W, sometimes known as a web.

The valves V are utilised - in known way - for the manufacture of confectionery products in which, after having been filled with a filling, the valves themselves are connected in pairs in a frontally coupled position to form a wafer shell enclosing the filling.

Naturally, in order to be able to utilise the valves V, they must be separated from the membrane W.

The apparatus according to the invention, generally indicated 10, is intended to perform the operation of separating the valves V from the wafer sheets C.

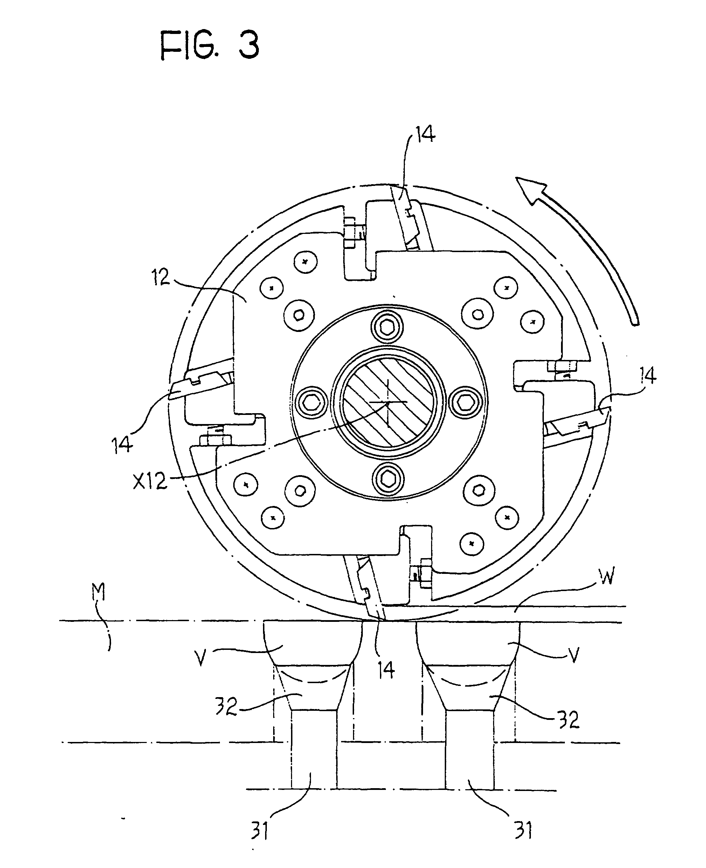

The apparatus 10 is substantially similar to a milling cutter, the active element of which is constituted by a milling element 12 capable of rotating at high speed (for example, 4000 revolutions/minute) about a respective central axis X12 held in a horizontal position so as to carry the blade or blades 14 of the element 12 to act on the membrane W of the wafer sheets C, as better illustrated in Figure 3.

As can be seen in this Figure, the blades 14 are mounted on the body of the milling element 12 so as to extend with their cutting edges around an imaginary cylindrical surface. The blades 14 are preferably mounted so that they are interchangeable, so that it is possible periodically to replace the blades worn out through use with new blades. The rotation of the milling element 12 about the axis X12 causes the orbital movement of the blade or blades 14 on a cylindrical cutting surface substantially identified by the aforesaid imaginary surface.

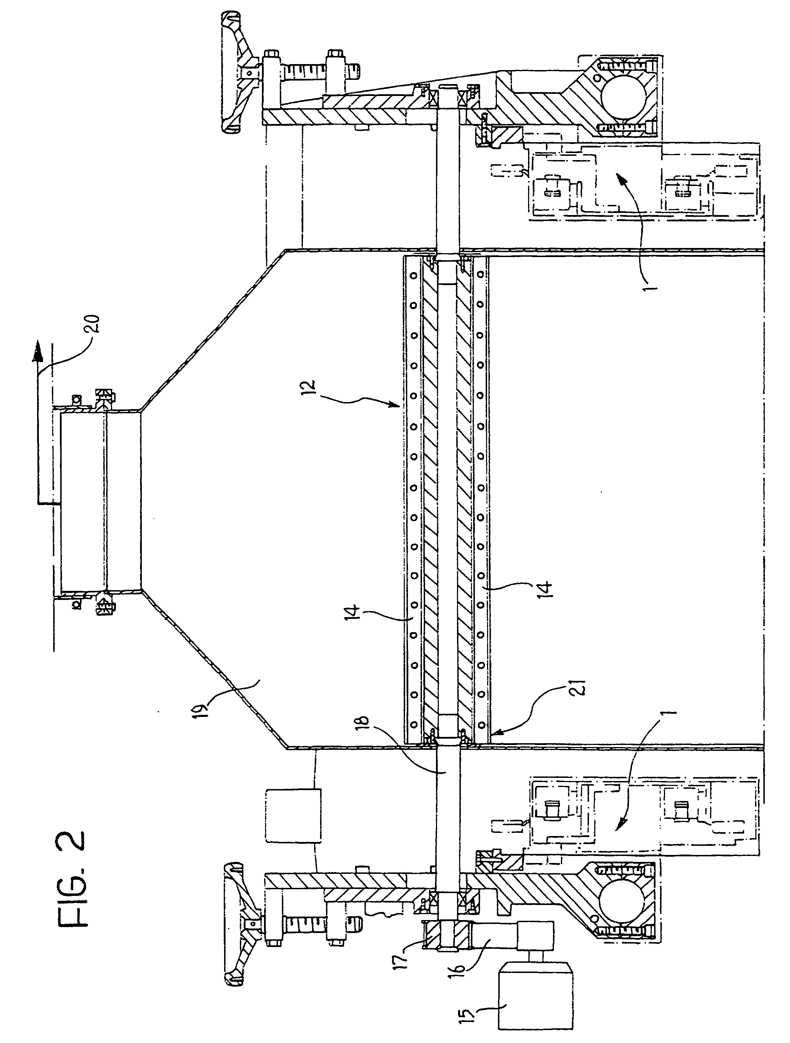

The rotation of the element 12 is controlled by a motor 15 (Figure 2) which drives a transmission system comprising at least one belt 16 passing over a pulley 17 fitted to an end of a motor shaft 18 constituting the principal shaft of the milling element 12.

As can be appreciated from the side view of Figure 1, the milling element 12 is located to operate inside a casing 19 connected to a suction line generally indicated 20, forming the top of a suction unit 22.

The casing or cap 19 has a lower mouth 21 which extends transversely to the direction of advance of the wafer sheets C on the conveyor 1, in a plane closely adjacent to and above the plane of cutting in which, at the lowest portion of their orbital path about the axis X12, the blades 14 themselves act on the web W of the wafer sheets in order to cut them up and separate them from the valves V.

As can be deduced from the mounting position of the blades 14 as shown in the drawings, the milling element 12 preferably rotates so that the blades 14 act on the web W, moving in the opposite direction to the direction of advancement of the wafer sheets C.

In the embodiment illustrated, and with reference to Figure 1, this result is obtained by rotating the milling element 12 in the anticlockwise direction so that in their zone of action on the web W, the blades 14 advance from left to right (always with reference to the point of view of Figure 1) while, as said above, the wafer sheets C advance from right to left.

Of course, it is also possible to operate in the opposite way, that is, so the blade or blades 14 of the milling element 12 act on the wafer sheets C by moving in a direction at least marginally in concordance with the direction of advancement of the wafer sheets C themselves.

The greatly fragmented wafer material resulting from the action of the blades 14 of the membrane W is, in any case, immediately returned to the inside of the casing or cap 19 due to the effect of the upwardly directed gaseous flow from the line 20. The aforesaid fragmented material can usefully be collected (in known way) at the outlet of the casing or cap 19 for possible re-utilisation.

It will be appreciated that the aforesaid suction of the fragmented material is particularly effective due to the fact that the sides of the casing 19 which define - at the milling element 12 - the greater sides of the mouth 21, extend close to the outer surface of the element 12 itself.

In order to fix these ideas (without, naturally, them being interpreted in a limitative sense of the application of the invention), the milling element 12 can have an outer diameter (a diameter of the cutting path, that is, the path of rotation of the cutting edges of the blades 14) of the order of 10-12 cm (preferably, slightly greater than 11 cm) and a length (that is, along the cutting face) generally of the order of several tens of centimetres, for example, 60-70 cm or more, depending on the specific operational requirements.

From the above, it is clear that there is no link, and thus no related constraints, between the dimensions of the valves V and the dimensions of the cutting elements (the blades 14) intended to act on the wafer sheets C, with an exception as regards the clear limit given by the fact that the element 12 cannot in general act on wafer sheets C having a width (the dimension in the transverse direction with respect to the dimension of advance of the wafer sheets C) greater than its cutting front.

The element 12 is thus capable of effectively removing the web W without giving rise to dead zones, or zones treated insufficiently, whatever the dimensions - and the shape - of the valve-V.
In particular, the apparatus according to the invention is also capable of operating on valves V located, so to say, in a quincuncial arrangement instead of in an ordered array with lines and columns respectively parallel and orthogonal with respect to the direction of advancement of the wafer sheets, or even on valves - or shaped parts of the wafer of any form - having mutually interpenetrating profiles.

In order to ensure the necessary precision in the performance of the cutting operation, avoiding causing damage to the valves V, it is important to ensure that the wafer sheets C are guided steadily and precisely in their advance towards the milling element 12. It is equally important that, even immediately after they have been separated from the web W, the valves V are not even only marginally disturbed or moved with respect to the receiving cavities of the moulds M in which they are located.

In this regard it is observed that the situation illustrated by way of example in the right hand part of Figure 1 represents essentially a theoretical model in which all of the valves V, still connected to the web W, are all accommodated precisely and completely in the corresponding cavities of the moulds M of the conveyor 1. In reality, even when located in the mould utilised for cooking, the wafer sheet C is usually slightly raised with respect to the mould itself, and is not precisely orientated in a horizontal plane. This is due principally to the dimensional variations caused in the wafer by cooking.

In the apparatus 10 according to the invention it is therefore provided that, especially while cutting the valves V, the wafer sheets C are raised in a controlled way with respect to the theoretical plane of movement of the conveyor 1, thus ensuring that the valves V are securely retained before, during and immediately after the cutting operation.

To this end, a positioning device 24 is provided below the conveyor 1 at the zone in which the milling element 12 acts, constituted substantially by:
- a guide unit 25 which extends horizontally below the conveyor 1 at the zone in which the milling element 12 operates; the guides 25 preferably have a length (measured in the direction of advance of the wafer sheets C) corresponding approximately - and, in reality, at least slightly greater - to double the length of the wafer sheets C (and, in practice, of the moulds M) measured in the same direction;
- a moving element 26 movable backwards and forwards on the guide 25 due to the operation of a fluid actuator 27, the body 27a of which is mounted on the element 26 and the rod 27b of which is connected at its distal end to an engagement element 27c mounted on the casing of the apparatus 10; and
- a table 28 mounted on the element 26, capable of sliding vertically along respective guides 29 under the action of a further fluid actuator 30.

An array of gripper elements 31, preferably vacuum gripper elements, is disposed on the table 28 which extends in a substantially horizontal direction.

These are preferably gripper elements provided (according to an arrangement currently used in the handling of food products and, in particular, confectionery products) with gripper heads 32, each of which is substantially similar to a kind of suction cap having an axial cavity leading to a complex of pneumatic lines 33 connected (in a known way) to a source 34 of subatmospheric pressure (a vacuum). As shown in Figure 1 in the form of a separate block, the source of subatmospheric pressure 34 can, in fact, coincide at least partially with the suction pump 22, with the possible interposition of pressure regulation means.

The arrangement of the element 31 on the table 28 reproduces the arrangement of the cavities in the mould M, and thus the arrangement of the valves V in relation to the wafer sheets C.

The device 24 is capable of performing (under the control of a general control unit - not illustrated, but of known type - constituted, for example, by a so-called Programme Logic Controller, or PLC) an operating sequence which includes the following stages:
- positioning the device 24 and, in particular, the table 28, in the starting position shown in solid outline in Figure 1;
- waiting for a mould M advancing on the conveyor 1 to reach the advancement position in which the related cavities (and therefore the valves V of the wafer sheet C accommodated in the mould in question) are vertically aligned on the array of the elements 31;
- operating the actuator 30, with the raising of the table 28 and consequent penetration of the elements 31 into the cavities (formed - to this end - as through-holes) until the suction gripper elements 32 come into contact with the polar or bowl (downward facing) parts of the valves V;
- activating the vacuum lines 33 with the consequent vacuum gripping of the valves V by the elements 32; together with this gripping action, the lifting of the table 28 is controlled so as to lift the wafer sheet C at least marginally with respect to the mould M accommodating it, and take the web W into exact horizontal alignment with the plane in which the blades 14 of the milling element operate, that is, substantially at a tangent to the cylindrical cutting surface of the milling element 12;
- operating the actuator 27, with the consequent movement of the element 26 (and thus of the table 28, the elements 31 - and the wafer sheet C gripped and held thereby, together with the related mould M) into the position schematically illustrated in broken outline in the left hand part of Figure 1: as a consequence of this advancement, the web W of the wafer sheet is subjected to the action of the blades 14 of the milling element 12; the web is thus cut into pieces, releasing the valves V which are, however, held firmly by the gripper formations 32 of the elements 31, without therefore being subjected to undesirable movements before, during or after the sawing operation;
- on completion of the advance, thus, when the web W has been completely fragmented and removed from the milling element 12, returning the table 28 downwards as a result of the operation of the actuator 30 in the opposite direction to the preceding direction of operation, with the concomitant deactivation of the vacuum lines 33: the valves V are thus repositioned in the respective cavities and left there, correctly positioned for the gripper formations 32 of the elements 31 which follow the table 28 in its downwards movement; and
- operating the actuator 27 again in the opposite direction to the preceding operation, so as to return the element 26 to the starting position of the movement described above.

The sequence of operation of the various elements under consideration (the actuator 27, the actuator 30, the vacuum lines 33, etc) with the prescribed times and sequence, is controlled by the control unit referred to above. The criteria for the configuration and programming of this unit depending on the desired result form part of the common knowledge of the expert in the field. These criteria do not therefore require detailed description in this document as they are not in themselves relevant to the comprehension of and/or the invention.

Preferably, the table 28 and, in a complementary way, the moulds M are provided with formations for reciprocal engagement such as pins having an at least partially conical shape, indicated 35, and provided on the upper face of the table 28 for engagement in corresponding apertures (not illustrated in detail in the drawings) on the lower face of the moulds M. The aforesaid formations 35, acting in practice as centring formations, are directed so that, in the lifting movement described above, the table 28 engages the moulds M in a precisely determined relative position so as to ensure the precise centring of the elements 31 with respect to the cavities of the moulds M and, thus, the precise alignment of the vacuum formations 32 with the valves V.

Naturally, the principle of the invention remaining the same, the details of production and the embodiments can be widely varied with respect to that described and illustrated, without by this departing from the ambit of the present invention as defined in the accompanying claims.

## Claims

1. Apparatus for cutting shell valves (V) formed in a wafer sheet (C) in which the valves (V) are connected by a substantially flat web (W), including cutting means (11) acting parallel to the general plane of the wafer (C) with a relative advance between the wafer sheet (C) and the cutting means (12), **characterised in that** the said cutting means include a milling element (12) provided with at least one blade (14) capable of an orbital movement on a substantially cylindrical cutting surface interfering with said web for milling away said web, and **in that** the apparatus includes positioning means (24) for the wafer sheet to achieve the said relative advance with the said web (W) substantially at a tangent to the said cutting surface, so that the web (W) is exposed to the action of the said at least one blade (14) of the milling element.

2. Apparatus according to Claim 1, **characterised in that** the said at least one blade (14) is releasably mounted on the said milling element (12).

3. Apparatus according to Claim 1 or Claim 2, **characterised in that** the said milling element has associated motor means (15 to 18) in order to move the said at least one blade (14) in the opposite direction to the direction of the said relative advance of the wafer sheet (C) with respect to the milling element (12).

4. Apparatus according to any preceding claim, **characterised in that** it includes suction means (19 to 22) acting in correspondence with the said milling element (12) to separate the fragmented material resulting from the action of the said at least one blade (14) on the said web (W).

5. Apparatus according to Claim 4, **characterised in that** the said suction means (19 to 22) include a suction mouth (21) connected in close proximity to the region in which the said web (W) is exposed to the action of the said at least one blade (14) of the milling element.

6. Apparatus according to Claim 4 or Claim 5, **characterised in that** the said milling element (12) is cylindrical, and **in that** the said suction means (19 to 22) include a casing (19) defining a suction mouth which closely surrounds the said milling element (12).

7. Apparatus according to any preceding claim, **characterised in that** the said positioning means (24) include gripper elements (31, 32) able to act positively on the said valves (V) at least when the said web (W) is exposed to the action of the said at least one blade (14) of the said milling element (12).

8. Apparatus according to Claim 7, **characterised in that** the said positioning means include a plurality of gripper elements (31, 32), each capable of acting on a respective said valve (V).

9. Apparatus according to Claim 7 or Claim 8, **characterised in that** the said positioning means (24) include positioning elements (31) provided with gripper formations (32), generally in the shape of a sucker.

10. Apparatus according to any of Claims 7 to 9, **characterised in that** the said positioning means (24) include gripper elements (31, 32) capable of acting on the said valves (V) by performing a vacuum gripping action.

11. Apparatus according to any preceding claim, **characterised in that** the said positioning means (24) include movement means (25 to 27) capable of imparting a relative movement to the said valves (V)comprising:
- a movement of the said wafer (C) towards the said milling element (12) with the positioning of the said web (W) in a plane substantially tangential to the said cutting surface of the said milling element (12);
- an advance of the said wafer sheet (C) with respect to the said milling element (12), the said web (W) being exposed to the action of the said at least one blade (14) of the milling element (12) with the consequent fragmentation of the said web (W) by the said milling element (12); and
- the spacing of the valves (V) cut from the said wafer sheet from the aforesaid plane substantially tangential to the cutting surface of the said milling element (12).

12. Apparatus according to Claim 7 and Claim 11, **characterised in that** the said gripper elements (31, 32) are mounted on said motor means (25 to 28) so as to effect the said positive gripping action on the said valves (V) at least during the said advance of the wafer sheet (C) with respect to the milling element (12).

13. Apparatus according to Claim 12, **characterised in that** the said motor means include:
- a support structure (28) for the said gripper elements (31, 32);
- at least a first motor element (30) for moving the said support structure (28) towards and away from the said plane substantially tangential to the cutting surface of the said milling element (12); and
- at least a second motor element (27) for causing the said advance of the said support structure (28) with respect to the said milling element (12).

14. Apparatus according to Claim 13, **characterised in that** it includes a movement element which supports the said support structure (28) as well as the said at least one first motor element (30); the said movement element (26) being exposed to the action of the said at least one second motor element (27).

15. Apparatus according to any preceding claim, which acts on the said wafer sheet accommodated in a respective mould (M), **characterised in that** the said positioning means (24) include fine centring means (35) which act on the said mould (M) in order to achieve the exact positioning of the said valves (V) with respect to the positioning means (24) themselves.

## Patentansprüche

1. Vorrichtung zum Ausschneiden von in einem Waffelblatt (C) ausgeformten Halbschalten (V), in dem die Halbschalen (V) über einen im wesentlichen flachen Steg (W) verbunden sind, umfassend eine Schneideinrichtung (11), die bei einem Relativ-Transport zwischen Waffelblatt (C) und Schneideinrichtung (12) parallel zu der allgemeinen Ebene des Waffelblatts (C) arbeitet, **dadurch gekennzeichnet, dass** die Schneideinrichtung ein Fräselement (12) aufweist, das mit wenigstens einer Schneide (14) versehen ist, die zu einer kreisförmigen Bewegung auf einer im wesentlichen zylindrischen Schneidfläche geeignet ist, die zum Wegfräsen des Stegs in den Steg eingreift und dadurch, dass die Vorrichtung eine Positioniereinrichtung (24) für das Waffelblatt aufweist, um den Relativ-Transport derart zu bewerkstelligen; dass der Steg (W) im wesentlichen an einer Tangente der Schneidfläche liegt, so dass der Steg (W) der Wirkungsweise der wenigstens einen Schneide (14) des Fräselements ausgesetzt ist.

2. Vorrichtung nach Anspruch 1; **dadurch gekennzeichnet, dass** die wenigstens eine Schneide (14) entfernbar an dem Fräselement (12) angebracht ist.

3. Vorrichtung nach Anspruch 1 oder 2, **dadurch gekennzeichnet, dass** das Fräselement eine zugehörige Motoreinrichtung (15 bis 18) aufweist, um die wenigstens eine Schneide (14) in der zu der Richtung des Relativ-Transports des Waffelblatts (C) in bezug auf das Fräselement (12) entgegengesetzten Richtung zu bewegen.

4. Vorrichtung nach einem der vorstehenden Ansprüche, **dadurch gekennzeichnet, dass** sie eine Absaugeinrichtung (19 bis 22) aufweist, die in Einklang mit dem Fräselement (12) arbeitet, um das aus der Wirkungsweise der wenigstens einen Schneide (14) auf den Steg (W) resultierende fragmentierte Material zu entfernen.

5. Vorrichtung nach Anspruch 4, **dadurch gekennzeichnet, dass** die Saugeinrichtung (19 bis 22) eine Saugöffnung (21) aufweist, die in der Nähe des Bereichs, in dem der Steg (W) der Wirkungsweise der wenigstens einen Schneide (14) des Fräselements ausgesetzt ist, angeordnet ist.

6. Vorrichtung nach Anspruch 4 oder 5, **dadurch gekennzeichnet, dass** das Fräselement (12) zylindrisch ist und dadurch, dass die Saugeinrichtung (19 bis 22) ein Gehäuse (19) aufweist, das eine Saugöffnung definiert, die das Fräselement (12) eng umgibt.

7. Vorrichtung nach einem der vorstehenden Ansprüche, **dadurch gekennzeichnet, dass** die Positioniereinrichtung (24) Greifelemente (31, 32) aufweist, die in der Lage sind, wenigstens wenn der Steg (W) der Wirkungsweise der wenigstens einen Schneide (14) des Fräselements (12) ausgesetzt ist, positiv auf die Halbschalten (V) einzuwirken.

8. Vorrichtung nach Anspruch 7, **dadurch gekennzeichnet, dass** die Positioniereinrichtung mehrere Greifelemente (31, 32) aufweist, die jeweils in der Lage sind, auf eine entsprechende Halbschale (V) einzuwirken.

9. Vorrichtung nach Anspruch 7 oder 8, **dadurch gekennzeichnet, dass** die Positioniereinrichtung (24) Positionierelemente (31) aufweist, die mit Greifsh ukturen (32) ausgestattet sind, die im allgemeinen die Form eines Saugnapfs haben.

10. Vorrichtung nach einem der Ansprüche 7 bis 9, **dadurch gekennzeichnet, dass** die Positioniereinrichtung (24) Greifelemente (31, 32) aufweist, die in der Lage sind, durch das Ausführen eines Vakuumgreifvorgangs auf die Halbschalen (V) einzuwirken.

11. Vorrichtung nach einem der vorstehenden Ansprüche, **dadurch gekennzeichnet, dass** die Positioniereinrichtung (24) eine Bewegungseinrichtung (25 bis 27) aufweist, die in der Lage ist, den Halbschale (V) eine Relativbewegung zu erteilen, die umfasst:
- eine Bewegung des Waffelblatts (C) in Richtung des Fräselements (12) mit der Positionierung des Stegs (W) in einer Ebene im wesentlichen tangential zu der Schneidfläche des Fräselements (12);
- einen Transport des Waffelblatts (C) in bezug auf das Fräselement (12), wobei der Steg (W) der Wirkungsweise der wenigstens einen Schneide (14) des Fräselements (12) mit der folgenden Fragmentierung des Stegs (W) durch das Fräselement (12) ausgesetzt ist; und
- den Abstand der Halbschalten (V), die aus der vorstehenden Ebene, die im wesentlichen tangential zu der Schneidfläche des Fräselements (12) liegt aus dem Waffelblatt ausgeschnitten werden.

12. Vorrichtung nach Anspruch 7 und 11, **dadurch gekennzeichnet, dass** die Greifelemente (31, 32) auf der Motoreinrichtung (25 bis 28) angebracht sind, um die positive Greifwirkung auf die Halbschalen (V) wenigstens während dem Transport des Waffelblatts (C) in bezug auf das Fräselement (12) zu bewirken.

13. Vorrichtung nach Anspruch 12, **dadurch gekennzeichnet, dass** die Motoreinrichtung umfasst:
- einen tragenden Aufbau (28) für die Greifelemente (31, 32);
- wenigstens ein erstes Motorelement (30) zum Bewegen des tragenden Aufbaus (28) in Richtung zu der im wesentlichen zu der Schneidfläche des Fräselements (12) tangentialen Ebene und von dieser weg; und
- wenigstens ein zweites Motorelement (27), um den Transport des tragenden Aufbaus (28) in bezug auf das Fräselement (12) zu verursachen.

14. Vorrichtung nach Anspruch 13, **dadurch gekennzeichnet, dass** sie ein Bewegungselement aufweist, das den tragenden Aufbau (28), sowie das wenigstens erste Motorelement (30) haltert; wobei das Bewegungselement (26) der Wirkung des wenigstens einen zweiten Motorelements (27) ausgesetzt ist.

15. Vorrichtung nach einem der vorstehenden Ansprüche, die auf das Waffelblatt, das in einer entsprechenden Formhälfte (M) aufgenommen ist, wirkt, **dadurch gekennzeichnet, dass** die Positioniereinrichtung (24) eine genaue Zentriereinrichtung (35) aufweist, die auf die Formhälfte (M) wirkt, um zu erreichen, dass sich die Halbschalen (V) in bezug auf die Positioniereinrichtung (24) selbst exakt positionieren.

## Revendications

1. Appareil de coupé de demi-coquilles (V) formées dans une feuille à gaufrette (C) dans laquelle les coquilles (V) sont reliées par une bande sensiblement plate (W), incluant un moyen (11) de coupe agissant parallèlement au plan global de la gaufrette (C) avec une avance relative entre la feuille à gaufrette (C) et le moyen (12) de coupe, **caractérisé en ce que** ledit moyen de coupe inclut un élément (12) de fraisage, pourvu d'au moins une lame (14) capable d'un mouvement orbital sur une surface de coupe sensiblement cylindrique interférant avec ladite bande pour fraiser ladite bande, et **en ce que** l'appareil inclut des moyens (24) de positionnent permettant à ladite feuille à gaufrette d'obtenir ladite avance relative, ladite bande (W) se trouvant sensiblement au niveau d'une ligne tangente à ladite surface de coupe, de sorte que la bande (W) est exposée à l'action de ladite au moins une lame (14) de l'élément de fraisage.

2. Appareil selon la revendication 1, **caractérisé en ce que** ladite au moins une lame (14) est montée de manière libérable sur ledit élément (12) de fraisage.

3. Appareil selon la revendication 1 ou la revendication 2, **caractérisé en ce que** ledit élément de fraisage comporte des moyens moteurs associés (15 à 18) afin de faire bouger ladite au moins une lame (14) dans le sens contraire au sens de ladite avance relative de la feuille à gaufrette (C) par rapport à l'élément (12) de fraisage.

4. Appareil selon l'une quelconque des revendications précédentes, **caractérisé en ce qu'**il comprend des moyens (19 à 22) d'aspiration agissant en correspondance avec ledit élément (12) de fraisage pour séparer la matière fragmentée résultant de l'action de ladite au moins une lame (14) sur ladite bande (W).

5. Appareil selon la revendication 4, **caractérisé en ce que** lesdits moyens (19 à 22) d'aspiration comprennent une embouchure (21) d'aspiration communiquant, à proximité immédiate, avec la région dans laquelle ladite bande (W) est exposée à l'action de ladite au moins une lame (14) de l'élément de fraisage.

6. Appareil selon la revendication 4 ou la revendication 5, **caractérisé en ce que** ledit élément (12) de fraisage est cylindrique, et **en ce que** lesdits moyens (19 à 22) d'aspiration comprennent une enveloppe (19) définissant une embouchure d'aspiration qui entoure étroitement ledit élément (12) de fraisage.

7. Appareil selon l'une quelconque des revendications précédentes, **caractérisé en ce que** lesdits moyens (24) de positionnement comprennent des éléments (31, 32) de saisie pouvant agir positivement sur lesdites coquilles (V) au moins lorsque ladite bande (W) est exposée à l'action de ladite au moins une lame (14) dudit élément (12) de fraisage.

8. Appareil selon la revendication 7, **caractérisé en ce que** lesdits moyens de positionnement comprennent une pluralité d'éléments (31, 32) de saisie, chacun pouvant agir sur une dite coquille respective (V).

9. Appareil selon la revendication 7 ou la revendication 8, **caractérisé en ce que** lesdits moyens (24) de positionnement comprennent des éléments (31) de positionnement pourvus de formations (32) de saisie, globalement sous la forme d'une ventouse.

10. Appareil selon l'une quelconque des revendications 7 à 9, **caractérisé en ce que** lesdits moyens (24) de positionnement comprennent des éléments (31, 32) de saisie pouvant agir sur lesdites coquilles (V), en effectuant une action de saisie par dépression.

11. Appareil selon l'une quelconque des revendications précédentes, **caractérisé en ce que** lesdits moyens (24) de positionnement comprennent des moyens (25 à 27) de déplacement pouvant communiquer un déplacement relatif auxdites coquilles (V), comprenant :
un déplacement de ladite gaufrette (C) vers ledit élément (12) de fraisage avec le positionnement de ladite bande (W) dans un plan sensiblement tangent à ladite surface de coupe dudit élément (12) de fraisage;
une avance de ladite feuille à gaufrette (C) par rapport audit élément (12) de fraisage, ladite bande (W) étant exposée à l'action de ladite au moins une lame (14) de l'élément (12) de fraisage, en ayant pour conséquence la fragmentation de ladite bande (W) par ledit élément (12) de fraisage; et
l'espacement des coquilles (V), coupées à partir de ladite feuille à gaufrette, du plan mentionné précédemment sensiblement tangent à la surface de coupe dudit élément (12) de fraisage.

12. Appareil selon la revendication 7 et la revendication 11, **caractérisé en ce que** lesdits éléments (31, 32) de saisie sont montés sur lesdits moyens moteurs (25 à 28) de façon à effectuer ladite action de saisie positive sur lesdites coquilles (V) au moins pendant ladite avance de ladite feuille à gaufrette (C) par rapport à l'élément (12) de fraisage.

13. Appareil selon la revendication 12, **caractérisé en ce que** lesdits moyens moteurs comprennent :
une structure (28) de support destinée auxdits éléments (31, 32) de saisie ;
au moins un premier élément moteur (30). destiné à déplacer ladite structure (28) de support en l'approchant et en l'écartant dudit plan sensiblement tangent à la surface de coupe de l'élément (12) de fraisage ; et
au moins un second élément moteur (27) destiné à provoquer ladite avance de ladite structure (28) de support par rapport audit élément (12) de fraisage.

14. Appareil selon la revendication 13, **caractérisé en ce qu'**il comprend un élément de déplacement qui supporte ladite structure (28) de support de même que ledit au moins un premier élément moteur (30) ; ledit élément (26) de déplacement étant exposé à l'action dudit au moins un second élément moteur (27).

15. Appareil selon l'une quelconque des revendications précédentes, qui agit sur ladite feuille à gaufrette reçue dans un moule respectif (M), **caractérisé en ce que** lesdits moyens (24) de positionnement comprennent des moyens (35) de centrage fin qui agissent sur ledit moule (M) afin d'obtenir le positionnement exact desdites coquilles (V) par rapport aux moyens (24) de positionnement eux-mêmes.
